# EUROPEAN PATENT SPECIFICATION

(11) **EP 3 882 687 B1**
(45) Date of publication and mention of the grant of the patent: **26.10.2022**
(21) Application number: 20163815.2
(22) Date of filing: 18.03.2020
(51) Int. Cl.: G02B 27/01, G02B 26/10

(54) **PROJECTION APPARATUS AND CORRESPONDING METHOD AND COMPUTER PROGRAM**
PROJEKTIONSVORRICHTUNG UND ZUGEHÖRIGES VERFAHREN UND COMPUTERPROGRAMM
APPAREIL DE PROJECTION, PROCÉDÉ CORRESPONDANT ET PROGRAMME INFORMATIQUE

(43) Date of publication of application: 22.09.2021
(73) Proprietor: Bayerische Motoren Werke Aktiengesellschaft, 80809 München (DE)
(72) Inventor: Iliffe-Moon, Etienne, Menlo Park, CA California 94025 (US); Eichhorn, Julian, Menlo Park, CA California 94025 (US); Mok, Brian, Santa Clara, CA California 95050 (US)

(56) References cited:
- EP-A1- 0 601 925
- EP-A1- 0 619 509
- US-A1- 2006 145 825
- US-A1- 2010 253 489

## Description

### Field

Examples relate to a projection apparatus for a vehicle, to a method for providing a projection within or outside a vehicle, to a corresponding computer program, and to a vehicle.

### Background

The interior of a vehicle is one of the aspects of a vehicle that can set it apart from other vehicles. For example, high quality surfaces and a polished finished may bring joy to the users of the vehicle, as may a powerful high-fidelity audio system.

One aspect that is part of this experience is the display and manipulation of information within the vehicle's interior. For example, in some basic concept, a central display is used to provide information to the users. In addition, auxiliary displays may be employed, e.g. integrated within the headrests of the front row, or as a head-up-display. Another option is the use of projections within the vehicle interior, e.g. onto the interior surfaces, users' bodies and objects, which provides many User Experience (UX) opportunities. Projection technologies may have limitations in the effective projection area. For example, either the projection may be limited to a small effective area, or a large area may be covered with a wide-angle projector, with limited brightness of the projection (e.g. depending on projected brightness, lens/beam angle and cost).

US patent application US 2010/0253489 A1 relates to a concept for distortion and perspective correction of a vector projection display. In said application, graphical images are projected upon a windshield of a vehicle. Perspective correction is applied to a projection of the graphical images, such that the projected images appear as desired on the windshield.

### Summary

There may be a desire for an improved concept for a projection system for a vehicle.

This desire is addressed by the subject-matter of the independent claims.

Embodiments of the present disclosure are based on the finding, that instead of using a projector with a fixed optical path towards the projection surface, a projection can be used that is bounced towards the projection surface via a moveable mirror. As a vehicle's interior typically provides a non-even projection surface, a three-dimensional characteristic (e.g. a three-dimensional orientation in space and/or a three-dimensional surface structure) of a portion of the projection surface that the projection is targeted at is considered when generating the display signal, so that the image that is shown on that portion of the projection surface is (mostly) undistorted and matches the extent of the portion of the projection surface. The three-dimensional characteristic is relevant to adapting the image to avoid distortions. It may indicate how the angular orientation of the projection surface (relative to the projector) drives the three-dimensional characteristics across different points (or the extents) of the projection surface relative to the projector.

Embodiments of the present disclosure provide a projection apparatus for a vehicle. The projection apparatus comprises a reflection device configured to provide a reflective surface with a varying angle relative to a projection surface. The projection apparatus comprises a projector configured to emit a projection beam towards the reflective surface of the reflection device. The projection apparatus comprises a processing module configured to determine a portion of the projection surface that the projection beam is to be emitted towards. The processing module is configured to control the reflection device to adjust the angle of the reflective surface relative to the projection surface based on the determined portion of the projection surface. The processing apparatus is configured to determine a three-dimensional characteristic of the portion of the projection surface. The processing apparatus is configured to generate a display signal for the projector based on the portion of the projection surface and based on the three-dimensional characteristic of the portion of the projection surface. By using a reflection device with a reflective surface with a varying angle relative to the projection surface, the projection provided by the projector may be directed towards different portions of the projection surface. The three-dimensional characteristic of the portion of the projection surface the projection is directed at may then be used to adjust, i.e. pre-distort, the projection provided by the projector.

In accordance with the invention, the processing module is configured to obtain a sensor signal from a sensor of the vehicle. The sensor signal comprises information on the three-dimensional characteristic of the portion of the projection surface. The processing module is configured to determine the three-dimensional characteristic of the portion of the projection surface based on the sensor signal. By gathering the three-dimensional characteristic using a sensor, the projection may be performed on portions of the projection surface that may move, i.e. that are non-static surfaces.

For example, the sensor signal may be a sensor signal of a depth sensor of the vehicle. For example, a 3D sensing camera, such as a Time of Flight-sensor may be used to generate the sensor signal.

For example, the sensor signal may comprise information on at least one of a surface structure, a position, an orientation, a size, and a boundary of the portion of the projection surface. This information may be used to determine the three-dimensional characteristic of the portion of the projection surface, and/or to select the portion of the projection surface.

In some embodiments, the projection apparatus comprises the sensor. The sensor may be directed towards the reflective surface of the reflection device. The sensor may be configured to determine the sensor signal via the reflective surface of the reflection device. Thus, the sensor might not have to cover the entire projection surface (all of the time).

The processing module may be configured to select the portion of the projection surface that the projection beam is to be emitted towards based on the sensor signal. In other words, based on the sensor signal, a suitable projection surface may be chosen.

For example, the processing module may be configured to obtain information on a content to be projected towards the projection surface. The processing module may be configured to select the portion of the projection surface that the projection beam is to be emitted towards further based on the content to be projected towards the projection surface. For example, different content may be suitable for different portions of the projection surface, and/or suitable for different users present within the environment of the projection surface.

In various embodiments, the processing module is configured to determine an extent of the portion of the projection surface based on the sensor signal, and to adjust the display signal such, that a content portion of the projection beam matches the extent of the portion of the projection surface. In other words, the portion of the projection surface may have a specific size, rotation, distance etc. from the reflective surface, and the display signal may be adjusted to adjust the projection to the portion of the projection surface. For example, the extent of the portion of the projection surface may comprise at least one of a position, an orientation, a size, and a boundary of the portion of the projection surface.

In at least some embodiments, the processing module is configured to track a movement of the portion of the projection surface if the portion of the projection surface is provided by a non-static object within or outside the vehicle, and to update the angle of the reflective surface and the generation of the display signal based on the movement of the portion of the projection surface. Thus, the projection may follow the non-static object. This may be useful if the portion of the projection surface is a hand or a book of a user.

Alternatively, the portion of the projection surface may be provided by a static component of the vehicle. The processing circuitry may be configured to obtain the three-dimensional characteristic of the portion of the projection surface from a memory or storage device. In other words, if the projection is provided on static portions of the projection surface, no depth sensor may be required.

In some embodiments, the reflection device is configured to adjust the angle of the reflective surface by rotating the reflective surface about a projection axis of the projection apparatus. The processing module may be configured to generate the display signal such, that a content portion of the projection beam rotates in synchronization with the rotation of the reflective surface. Thus, the orientation of the projected image may be preserved while the reflective surface is rotated.

In various embodiments, the reflection device is configured to provide the reflective surface with a varying angle relative to the projector. The reflection device may comprise an electro-mechanical component for varying the angle of the reflective surface relative to the projector and relative to the projection surface. In other words, the reflective surface may have a variable towards both the projector and the projection surface. Alternatively, the angle between the projector and the reflective surface may be fixed, and the projector may be moved in alignment with the reflective surface.

The processing module may be configured to generate the display signal such, that an effect of the three-dimensional characteristic on a presentation of content on the portion of the projection surface is at least partially compensated for. For example, the processing circuitry may be configured to generate the display signal such, that an unevenness in the portion of the projection surface, as represented by the three-dimensional characteristic of the portion of the of the projection surface, is at least partially compensated for. In other words, the display signal may be generated such, that a pre-distortion is applied to the projection that at least partially compensates for the three-dimensional characteristic/unevenness of the portion of the projection surface.

Embodiments of the present disclosure further provides a vehicle comprising the projection apparatus.

Embodiments of the present disclosure further provide a method comprising the subject-matter recited in claim 12.

Embodiments of the present disclosure further provide a computer program having a program code for performing the method, when the computer program is executed on a computer, a processor, or a programmable hardware component.

### Brief description of the Figures

Some examples of apparatuses and/or methods will be described in the following by way of example only, and with reference to the accompanying figures, in which
- Figs. 1a and 1b: show schematic diagrams of embodiments of a projection apparatus for a vehicle;
- Fig. 2: shows a schematic diagram of an embodiment of a method for providing a projection within or outside a vehicle;
- Fig. 3: shows a schematic diagram of a vehicle comprising a projection apparatus; and
- Figs. 4a: to 4e show schematic diagrams of embodiments of a projection apparatus, from different angles, and with different sensor configurations.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

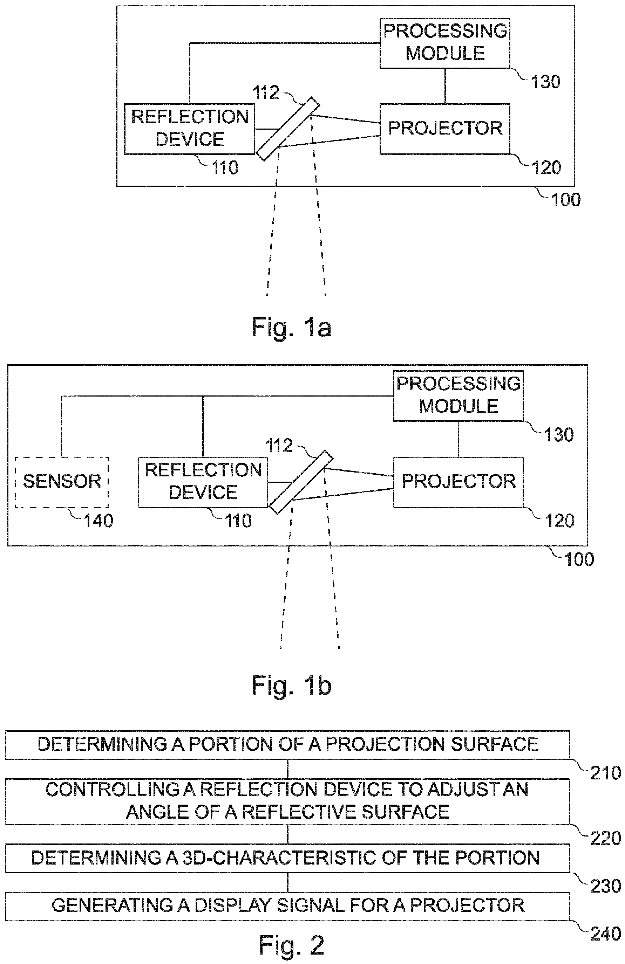

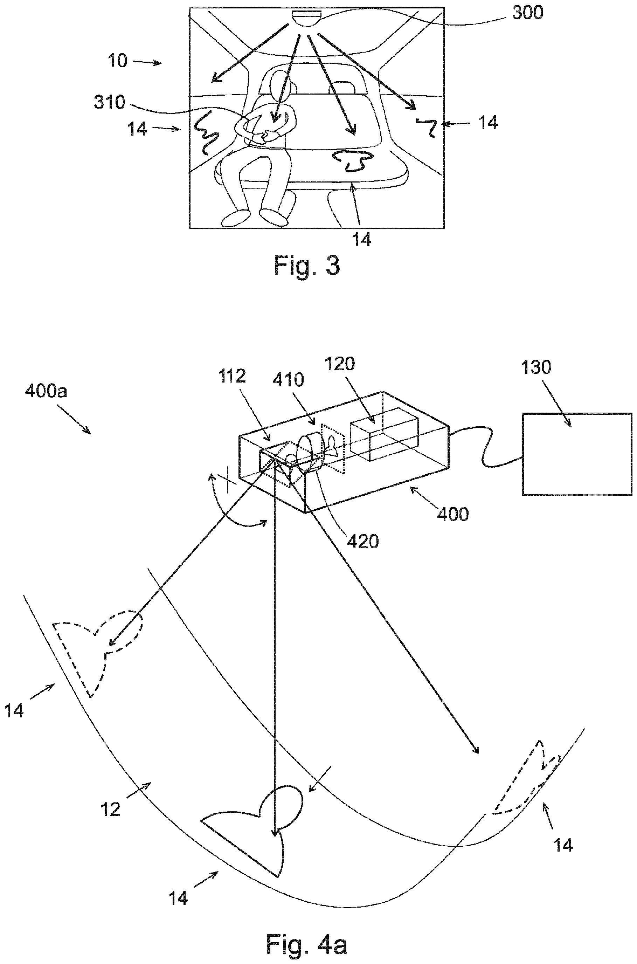

Figs. 1a and 1b show schematic diagrams of embodiments of a projection apparatus 100 for a vehicle (e.g. vehicle 10 of Fig. 3). The projection apparatus comprises a reflection device 110 configured to provide a reflective surface 112 with a varying angle relative to a projection surface 12. The projection apparatus comprises a projector 120 configured to emit a projection beam towards the reflective surface of the reflection device. The projection apparatus comprises a processing module 130 configured to determine a portion 14 of the projection surface that the projection beam is to be emitted towards. The processing model is configured to control the reflection device to adjust the angle of the reflective surface relative to the projection surface based on the determined portion of the projection surface. The processing model is configured to determine a three-dimensional characteristic of the portion of the projection surface. The processing circuitry is configured to generate a display signal for the projector based on the portion of the projection surface and based on the three-dimensional characteristic of the portion of the projection surface. While Fig. 1 does not show the corresponding vehicle, the projection apparatus may be mounted in a vehicle. Embodiments of the present disclosure thus provide a vehicle comprising the projection apparatus 100.

Embodiments of the present disclosure relate to a projection apparatus for a vehicle, and to a corresponding method and computer program. In other words - the projection apparatus is suitable for use in a vehicle, and may thus be mounted in a vehicle. For example, the projection apparatus may be mounted at the ceiling of the vehicle. For example, the projection apparatus may be arranged above the front or rear seats, or centrally above the center armrest.

The mounting position of the projection apparatus may determine, along with the variability of the angle of the reflective surface, also the extent of the projection surface. For example, the projection apparatus may be mounted such, and the reflective surface may be adjusted such, that the image projected by the projector can move from side to side across width of the cabin, or such that the projected image can move from front to back, or up and down the length of the cabin, or such that it can move along any axis of orientation inside the cabin. Accordingly, the projection surface may cover the width of the cabin (e.g. across the front row or across the back row), or the width of at least one of the seats (e.g. the driver or codriver seat). Alternatively, the projection surface may cover at least a portion of the length of the cabin, e.g. from the front row to the back row. For example, the projection surface may comprise one or more interior surfaces (e.g. a door trim, dashboard, seat, etc.), one or more surfaces of an occupant (e.g. hand or body) or object (any object in the vehicle, e.g. book, bag, phone, etc.). For example, the portion of the projection surface may be one of the above surfaces, e.g. an interior surface, a surface of an occupant, or a surface of an object. For example, the portion of the projection surface may be a surface of the dashboard of the vehicle, a surface of the ceiling of a vehicle, a surface of the seat of a vehicle, a surface of an armrest of the vehicle, a hand surface of the vehicle, or a surface of a book.

This projection surface is enabled by the reflection device 110 with its reflective surface 112. In general, the projection surface may be defined as the total surface (within and/or outside the vehicle) the projection beam of the projector can be projected at via the reflective surface (e.g. considering the angles supported by the reflective surface). The projection beam can only be directed at a single portion of the projection surface at the same time, such that only the portion of the projection surface that the projection beam is directed at (via the reflective surface) receives the reflected projection beam. In other words, the projection surface may be a potential projection surface - where the projection beam is actually directed to depends on the angle of the reflective surface. Accordingly, the projection surface is larger than the portion of the projection surface that is covered by the reflected projection beam. Additionally, the portion of the projection surface may be additionally constrained, e.g. by generating the display signal such, that a portion of the projection beam remains dark (or mostly dark, as total darkness might not be achievable using available projector technologies).

Thus, the reflection device is used to direct the projection beam towards the portion of the reflective surface. This is done by changing an angle of the reflective surface 112 of the reflection device. In other words, the portion of the projection surface that the projection beam is directed at changes with the angle of the reflective surface 112. Accordingly, the reflective surface may act as "bounce mirror" for the projection beam. The bounce mirror may bounce the light (of the projection beam) in the desired direction, controlled by the processing module. Moreover, the reflective surface may act as bounce mirror with a varying angle, thus a bounce mirror that can be used to direct the projection beam at different portions of the projection surface. The reflection device is configured to provide a reflective surface 112 with a varying angle relative to the projection surface. In other words, the reflection device may be configured to change the angle of the reflective surface 112 relative to the projection surface, e.g. such that the portion of the projection surface the projection beam is projected at changes. For example, this may be done by rotating the reflective surface such (about the projection axis), that the angle relative to the projection surface changes. In some embodiments, the reflective surface may be rotated together with the projector. In many embodiments, however, as shown in Figs. 4a to 4e, the angle of the reflective surface may be adjusted such, that not only the angle of the reflective surface relative to the projection surface changes, but also the angle relative to the projector changes. In other words, the reflection device may be configured to provide the reflective surface with a varying angle relative to the projector. The reflection device may comprise an electro-mechanical component (such as a servo motor) for varying the angle of the reflective surface relative to the projector and relative to the projection surface (e.g. by rotating the reflective surface about the projection axis). For example, the reflective surface may be mounted at an angle relative to the projection axis. The reflection device may be configured to rotate the reflective surface around the projection axis, thus changing the angle of the reflective surface relative to the projector and relative to the projection surface. In some embodiments, the reflection device may further be configured to adjust the angle of the reflective surface relative to the projection axis, such that a (limited) three-dimensional adjustment of the reflective surface is provided. For example, a limited three-dimensional rotation may be used to further increase the spatial area of the projection surface that can be projected upon (e.g. by introducing an additional rotation about an axis that is perpendicular to the projection axis of the reflective surface).

The projector 120 is configured to emit the projection beam towards the reflective surface of the reflection device (e.g. along the projection axis). For example, the projection axis may be the axis of the projection beam (from the projector to the reflective surface). The projector 120 may be configured to provide a digital projection, e.g. digital projection of an image that is static or dynamic (e.g. time based or movie type format). The projector 120 may be configured to provide a projection image (i.e. the image that is generated by an imaging component of the projector) via the projector beam towards the reflective surface. The projection image may be provided in an image plane, i.e. the plane of the imaging device within the projector (or theoretical plane before an optical lens at the output). In general, the imaging component of the projector may be a Digital Light Processing (DLP) imaging component, or an Liquid Crystal on Silicon (LCoS) imaging component. After the projection image is reflected by the reflective surface, a projected image may appear on the projection surface (e.g. on the portion of the projection surface).

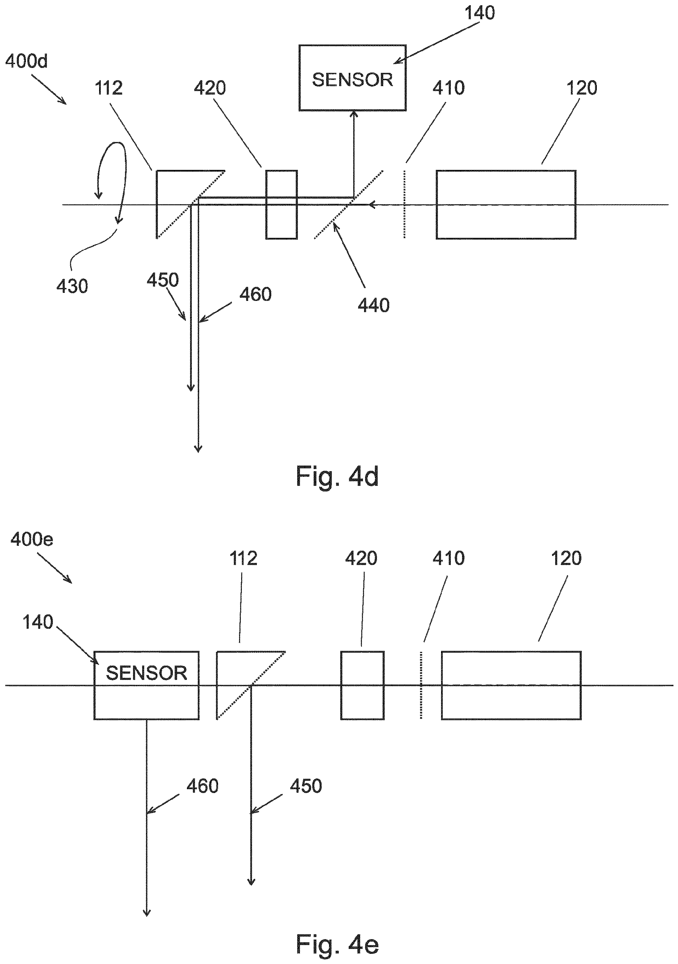

The projection apparatus further comprises the processing module, which is configured to coordinate the projector and the reflection device. For example, the processing module may be configured to control the reflection device (i.e. the angle of the reflective surface), and generate the display signal such, that it is adapted to the angle of the reflective surface. Before adjusting the reflective surface, and the display signal, the processing module may determine, which portion of the projection surface the reflected projection is to be directed at. In other words, the processing module is configured to determine the portion of the projection surface that the projection beam is to be emitted towards, e.g. to select a portion of the projection surface that the projection beam is to be emitted towards. In some embodiments, the projection system may be used (only) with static surfaces. For example, the portion of the projection surface may be provided by a static component of the vehicle. In this case, the portion of the projection surface may be selected out of a plurality of portions of the projection surface, the plurality of portions being provided by static components of the vehicle, such as the dashboard, armrest etc. In various embodiments, however, the portion of the projection surface is provided by a non-static object within or outside the vehicle, such as a hand of a user/occupant of the vehicle, or such as a book being held by a user/occupant of the vehicle. In this case, the portion of the projection surface may be determined/selected based on a sensor signal of a sensor of the vehicle. In accordance with the invention, the processing module is configured to obtain a sensor signal from a sensor 140 (as shown in Figs. 1b and 4d/4e) of the vehicle. In accordance with the invention, the sensor signal comprises information on a three-dimensional characteristic of at least the portion of the projection surface. The processing module is configured to determine the three-dimensional characteristic of the portion of the projection surface based on the sensor signal. For example, the sensor 140 may be a depth sensor (i.e. a 3D sensor), such as an optical or ultrasound-based Time-of-Flight sensor, or a structured light sensor. In other words, the sensor signal may be a sensor signal of a depth sensor 140 of the vehicle. In this case, the sensor signal may comprise a depth recording of at least the portion of the projection surface, which may be used to obtain the three-dimensional characteristic of the portion of the projection surface. Alternatively, the sensor 140 may be a camera sensor. In this case, the sensor image may comprise image data of at least the portion of the projection surface. The processing module may be configured to derive the three-dimensional characteristic of the portion of the projection surface from the image data of the camera, e.g. based on a distortion of the projected image on the portion of the projection surface.

Both types of sensors may be arranged either separately from the projection apparatus, or integrated in the projection apparatus (i.e. the projection apparatus may comprise the sensor). In the former case, the sensor may be directed (directly) towards at least the portion of the projection surface. In other words, the sensor (or sensors) used for tracking and recognition can be independent of the projection system - for example if the sensing technology has a sufficient field of view to encompass the complete projection space or extent of the vehicle cabin. Alternatively (or additionally, in case multiple sensors are used), the sensor(s) may be combined with the projection system - such that the sensors are incorporated relative to the mirror, lens or projection engine. For example, the sensor(s) may be mounted relative to the mirror such that it rotates with the mirror. Alternatively (or additionally, in case multiple sensors are used), the sensor(s) may be mounted in-line with the projection axis, at some point along the projection axis relative to the mirror. For example the sensor(s) might be mounted behind a combiner mirror such that it shares the same optical path as the projection beam. In other words, the sensor may be directed towards the portion of the projection surface via the reflective surface. In other words, the sensor may be directed towards the reflective surface of the reflection device. For example, the projection apparatus may comprise a combiner mirror (e.g. a one-way mirror that is used to align the optical path of the projection beam with the (optical) path of the sensor, e.g. such that the sensor is able to "look" coaxially along the projection beam. The sensor may be configured to determine the sensor signal (and thus the information on the three-dimensional characteristic of the determined portion of the projection surface) via the reflective surface of the reflection device.

The processing module may be configured to select the portion of the projection surface that the projection beam is to be emitted towards based on the sensor signal, e.g. based on the three-dimensional characteristic of different portions of the projection surface. In this context, the three-dimensional characteristic of the portion of the projection surface may comprise different components, such as the depth (i.e. a distance along the z-axis from the sensor or from reflective surface, along the direction of projected beam) of the portion of the projection surface relative to the reflection device, but also characteristics that go along with the depth, such as an evenness of the portion of the projection surface, an angle/three-dimensional orientation of the portion of the projection surface (towards the reflection device or relative to a coordinate space), or the size of the portion of the projection surface (e.g. its extent, boundaries, and orientation). For example, the sensor signal may comprise information on at least one of a surface structure, a position, a three-dimensional orientation, a size, and a boundary of at least the portion of the projection surface (e.g. of the entire projection surface, or of a section of the projection surface comprising the portion). The sensor signal might not only comprise depth information, but may also indicate the three-dimensional characteristics of the projection surface itself, such as position, three-dimensional orientation, size/scale (e.g. at that z-distance), boundaries and detail of the projection surface or portion of the projection surface. The three-dimensional characteristic may be important for the generation of the display signal, such that content may be scaled in size (proportionally or non-proportionally depending on the orientation or change in orientation of the projection surface). For example, a portion of a projection surface may be held at a large z-distance, then moved closer to the projector (small z-distance) - in this case, the size of a projected graphic or GUI may be maintained. The z-depth of the projection surfaces may also be used, dependent on the type of projector. Some types of projectors may need a focus adjustment (to adjust focus across different z-depths to maintain focus and crisp image formation), some laser projection technologies do not.

Depending on the content that is to be displayed on the portion of the surface, a suitable surface may be selected. For example, the processing module may be configured to obtain information on a content to be projected towards the projection surface. For example, the processing module may be configured to obtain the content to be projected towards the projection surface together with the information on the content (i.e. metadata) to be projected towards the projection surface, with the information on the content comprising information such as a desired type of projection surface for the content, a desired minimal or maximal size of the content, or a height/width ratio of the projected image. The processing module may be configured to select the portion of the projection surface that the projection beam is to be emitted towards further based on the content to be projected towards the projection surface, e.g. based on the desired type of projection surface for the content, a desired minimal or maximal size of the content, or a height/width ratio of the projected image. In other words, the processing module may be configured to select a portion of the projection surface that is suitable for the content. For example, the processing module may be configured to identify a surface within the sensor signal, the surface being suitable for the content, and use the surface as the portion of the projection surface. For example, the processing module may be configured to perform object detection on the sensor signal to identify one or more surfaces within the sensor signal, and to use one of the one or more surfaces as portion of the projection surface (e.g. as surface that is suitable for the content).

The processing module is configured to determine the three-dimensional characteristic of the portion of the projection surface based on the sensor signal. For example, the sensor signal may comprise information on at least one of a surface structure, a position, a three-dimensional orientation, a size, and a boundary of at least the portion of the projection surface. Accordingly, the three-dimensional characteristic of the portion of the projection surface may be comprise information on the surface structure of the portion of the projection surface (e.g. an evenness of the surface), and an angle/three-dimensional orientation of the portion of the projection surface. The three-dimensional characteristic of the portion of the projection surface may comprise information on the (z-) distance of the portion of the projection surface from the reflective surface (or from the projector or sensor), information the size of the portion of the projection surface, information on the size of the of the portion of the projection surface, and/or information on the three-dimensional orientation of the portion of the projection surface. The processing module may be configured to process the sensor signal to determine the three-dimensional characteristic of the portion of the projection surface.

In case the projection apparatus uses static surfaces as portion of the projection surface, no sensor signal might be required. In this case, the processing circuitry may be configured to obtain the three-dimensional characteristic of the portion of the projection surface from a memory or storage device.

The processing module is configured to control the reflection device to adjust the angle of the reflective surface relative to the projection surface based on the determined portion of the projection surface. In general, the reflective surface may be adjusted such (e.g. rotated such), that, as a result, the reflected projection beam is directed towards the portion of the projection surface. For example, the processing circuitry may be configured to determine the position of the portion of the projection surface within the projection surface (e.g. based on the three-dimensional characteristic of the portion of the projection surface), and to control the reflection device to adjust the angle such, that the reflected projection beam is directed towards the position of the portion of the projection surface (due to the adjusted angle of the reflective surface).

If the projection beam is directed towards different portions of the projection surface, the resulting projected image may be distorted at some, if not most, portions of the projection surface. For once, as the projection beam is directed towards the edges of the projection surface, the projected image may be subject to a lateral stretching effect. Additionally, the angle, and the surface structure of the portion of the projection surface may further distort the projected image. Therefore, the display signal may be pre-distorted to at least partially compensate for the three-dimensional characteristic of the portion of the projection surface. For example, projection mapping may be performed, to map the projection to the portion of the projection surface. For example, projection mapping may be performed for any surfaces (e.g. portions of the projection surface) within the cabin (e.g. seats, door trim, dashboard, users' hands and/or body, and/or any objects within the cabin (e.g. objects belonging within the vehicle or objects brought into the vehicle by the occupants), or objects/surfaces outside the vehicle. The projection mapping may be performed based on the three-dimensional characteristic of the portion of the projection surface, e.g. based on predefined data on surface geometry or by sensing the surface geometry in real-time. For example, real-time tracking and recognition of surfaces and objects may be performed to determine the portion of the projection surface and its extent, for example including both static and dynamic vehicle interior surfaces (e.g. articulating/moving seats, door panels, armrests, etc.), users' hands and/or bodies, and/or objects within the interior or brought into the interior by the occupants.

In general, the projection mapping may be performed by generating the display signal for the projector based on the portion of the projection surface and based on the three-dimensional characteristic of the portion of the projection surface. For the first part - the processing module is configured to generate the display signal for the projector based on the portion of the projection surface, more precisely based on the position of the portion of the projection surface within the projection surface. For example, the processing module may be configured to generate the display signal such, that the lateral stretching effect that occurs due to its position within the projection surface is compensated for (e.g. by applying non-proportional scaling).

Additionally or alternatively, the rotation of the reflective surface may be taken into account. For example, the reflection device may be configured to adjust the angle of the reflective surface by rotating the reflective surface about the projection axis of the projection apparatus. The processing circuitry may be configured to compensate for a rotation of the projected image that occurs due to the rotation of the reflective surface (in the generation of the display signal). In other words, the processing module may be configured to generate the display signal such, that a content portion of the projection beam rotates in synchronization with the rotation of the reflective surface. For example, the projection image (i.e. the content) may be digitally rotated relative to the image plane of the projector (which itself is stationary and does not rotate). The digital rotation may be synchronized with the physical rotation of the reflective surface. For example, the processing module may be configured to generate the display signal such, that a content portion of the projection beam rotates such, that the orientation of the projected image remains substantially the same, regardless of the position of the portion of the projection surface.

For the second part - the processing module is configured to generate the display signal for the projector based on the three-dimensional characteristic of the portion of the projection surface, e.g. in addition to the position of the projection surface, also based on one of more of the surface structure of the portion of the projection surface (is it an even surface or an uneven surface?), an angle/three-dimensional orientation of the portion of the projection surface relative to the reflective surface (is the surface slanted/tilted?), the extent/size of the portion of the projection surface (how big is the portion? does it have an irregular shape?), and/or based on the depth of the portion of the projection surface (how far is the portion of the projection surface away from the reflective surface?). The processing module may be configured to generate the display signal such, that an effect of the three-dimensional characteristic on a presentation of content on the portion of the projection surface is at least partially compensated for. For example, the processing circuitry may be configured to generate the display signal such, that an unevenness in the portion of the projection surface, as represented by the three-dimensional characteristic of the portion of the of the projection surface (i.e. the surface structure), is at least partially compensated for, e.g. by locally warping portions of the projection image. Additionally, the processing circuitry may be configured to generate the display signal such, that an angle/three-dimensional orientation of the portion of the projection surface, as represented by the three-dimensional characteristic of the portion of the of the projection surface, is at least partially compensated for, e.g. by laterally stretching or compressing the projection image (e.g. by applying non-proportional scaling), e.g. through digital manipulation of the display signal to compensate for distortion and scaling of the projected image.

Additionally, the content that is shown in the projection beam (i.e. the projection image) may be fitted to the portion of the surface, e.g. to the extent of the portion of the surface. For example, the extent of the portion of the projection surface comprises at least one of a position, a three-dimensional orientation, a size, and a boundary of the portion of the projection surface. Accordingly, the processing module may be configured to determine the extent (e.g. the size, boundaries and lateral orientation) of the portion of the projection surface based on the sensor signal. Based on the determined extent, the processing circuitry may be configured to determine, how to best fit the content onto the portion of the projection surface (preferably such that the content is facing such, that the user can read or recognize the content). The processing circuitry may be configured to adjust the display signal such, that a content portion of the projection beam (i.e. the projection image) matches the extent of the portion of the projection surface, e.g. such that the content portion of the projection beam matches the size and orientation of the portion of the projection surface and stays within the portion's boundaries. Accordingly, the processing circuitry may be configured to adjust the magnification (or zoom) of the content to match the extent of the portion of the projection surface, e.g. based on the three-dimensional characteristic/depth of the portion of the projection surface. In some embodiments, the processing circuitry may further be configured to adjust the focus of the projector based on the three-dimensional characteristic/depth of the portion of the projection surface.

As has been introduced before, in some embodiments, the portion of the projection surface may be formed by a non-static object, such as the hand of a user, or a book or magazine that a user reads. As these objects are not static, their three-dimensional characteristic, such as their position, angle, and even surface structure may be change, e.g. as the user moves their hand. In some embodiments, the projection surface, or at least the portion of the projection surface may be located outside the vehicle. For example, when a door or window is open, the projection system could project onto the ground outside of the vehicle or onto objects or people outside of the vehicle. Additionally the projection surface may include the interior of the door, such that when the door is opened the projection is dynamically adapted with the opening of the door, so the projected image(s) move with the door as it is opened. This can be implemented separately or in conjunction with the projection surface outside of the vehicle. The processing circuitry may be configured to track the movement of the non-static object. In other words, the processing module may be configured to track a movement of the portion of the projection surface if the portion of the projection surface is provided by a non-static object within or outside the vehicle. For example, the processing module may be configured to use object detection and geometrical transformations to track the movement of the portion of the projection surface (e.g. of the hand or book, or the surface outside the vehicle). The processing circuitry may be configured to update the angle of the reflective surface (i.e. control the reflection device to adjust the angle of the reflective surface to the updated three-dimensional characteristic) and the generation of the display signal (i.e. update the generation of the projection surface based on the updated three-dimensional characteristic of the portion of the optical system) based on the movement of the portion of the projection surface. In other words, when the position and/or the three-dimensional characteristic of the portion of the projection surface change, the processing circuitry may be configured to update the three-dimensional characteristic of the portion of the projection surface, and to update the angle of the reflective surface and the display signal accordingly.

In some embodiments, the processing module may further be configured to perform gesture detection based on the sensor signal. For example, the gesture detection may be used to control a user interface being projected by the projection apparatus. For example, the user interface may be projected onto the portion of the projection surface. The movement of a hand (which may be the portion of the projection surface, or which may be separate from the portion of the projection surface) may be tracked to determine a manipulation of the user interface. For example, the processing module may be configured to determine a movement of at least parts of the hand based on the sensor signal. For example, if the hand is not also used as portion of the projection surface, the hand may be used to "click" an active element within the user interface, and the position and actuation of the click may be determined via the sensor signal.

Alternatively (or additionally), the user interface may be projected onto a hand. In an exemplary implementation, different hand movements may correspond to different actions in the user interface. For example, when the hand is closed, the user interface may be in a standby state. To activate the user interface, the hand may be opened, to deactivate the user interface, the hand may be closed. After the hand being opened or closed is detected, an acoustic feedback may be provided. Once the hand is open, it may be used to navigate among the sections, where the last functionality or a context-specific functionality (such as changing volume after the music changes substantially, accessing navigation in case of a traffic jam etc.) may be preselected after activation. The choices may be projected on different fingers of the hand, and they may be activated by bending the respective finger, touching the finger with the thumb of the same hand or touching the finger with a finger of another hand. Upon selection of a function, an acoustic feedback may be provided. Once a function is selected, a movement of the hand along the x-,y- or z-axis may be used to adjust a setting, select a choice or confirm a setting or choice. For example, by lifting the hand (along the z-axis/depth-axis), a value may be increased or an item may be pressed, by lowering the hand (along the z-axis/depth-axis) the value may be decreased or the item may be released. By performing an x/y-movement (i.e. orthogonal to the z-axis/depth axis), an item may be selected. By tapping an item with the other hand, an item may be started/executed. After each performed action, an acoustic feedback may be provided.

In embodiments the processing module 130 may be implemented using one or more processing units, one or more processing devices, any means for processing, such as a processor, a computer or a programmable hardware component being operable with accordingly adapted software. In other words, the described function of the processing module 130 may as well be implemented in software, which is then executed on one or more programmable hardware components. Such hardware components may comprise a general purpose processor, a Digital Signal Processor (DSP), a micro-controller, etc.

More details and aspects of the projection apparatus are mentioned in connection with the proposed concept or one or more examples described above or below (e.g. Fig. 2 to 4e). The projection apparatus may comprise one or more additional optional features corresponding to one or more aspects of the proposed concept or one or more examples described above or below.

Fig. 2 shows a schematic diagram of an embodiment of a method for providing a projection within or outside a vehicle, e.g. using the projection apparatus of Figs. 1a or 1b. Features described in connection with the projection apparatus of Figs. 1a and/or 1b may likewise be applied to the method of Fig. 2. The method comprises determining 210 a portion of a projection surface that a projection beam of a projector is to be emitted towards. The method comprises controlling 220 a reflection device to adjust an angle of a reflective surface relative to the projection surface based on the determined portion of the projection surface. The projector beam is emitted towards the portion of the projection surface via the reflective surface. The method comprises determining 230 a three-dimensional characteristic of the portion of the projection surface. The method comprises generating 240 a display signal for the projector based on the portion of the projection surface and based on the three-dimensional characteristic of the portion of the projection surface.

More details and aspects of the projection method are mentioned in connection with the proposed concept or one or more examples described above or below (e.g. Fig. 1a to 1b, 3 to 4e). The projection method may comprise one or more additional optional features corresponding to one or more aspects of the proposed concept or one or more examples described above or below.

Various embodiments of the present disclosure relate to a concept that is introduced as "Digital Projection Articulation" in the following.

Projections within the vehicle cabin interior (e.g. onto the interior surfaces, users' bodies and objects), or outside the vehicle (e.g. onto the ground or onto a wall), provide many User Experience opportunities. On the other hand, projection technologies often have limitations in the effective projection area (e.g. depending on the projected brightness, lens/beam angle and cost). To cover a large spatial area with a conventional projector may require a large wide-angle optical lens and a projector with substantially higher power output. This arrangement has various disadvantages; e.g. increased physical size, increased thermal management, potential image distortion, increased costs, etc. To overcome these limitations, a simple, low-cost solution to electromechanically articulate the digital projection over a wider spatial area is proposed. Embodiments may provide cost effective digital projection across a large spatial area

Embodiments, on the other hand, may allow for projection mapping to interior surfaces, object and hand and/or body surfaces. Embodiments may further allow for tracking and recognition of hand gestures, body gestures and objects.

Fig. 3 shows a schematic diagram of a vehicle 10 comprising a projection apparatus 300 according to an embodiment. For example, the projection apparatus 300 may be mounted at the ceiling of the vehicle. The angle of projection of the projection apparatus may be directed at three potential portions 14 of the projection surface. As shown in Fig. 3, one of the portions of the projection surface may be on a hand of a user 310 sitting within the vehicle.

Figs. 4a to 4e show schematic diagrams of embodiments of a projection apparatus/projection system 400a-400e, from different angles, and with different sensor configurations. Fig. 4a shows a schematic system overview of a projection apparatus/system 400a in a ¾ view. The projection apparatus comprises a projection + light engine 120 (e.g. the projector 120), a lens 420, a bounce mirror 112 (e.g. the reflective surface 112 of the reflection device 110), and a control system 130 (e.g. the processing module 130). The projection apparatus may comprise the bounce mirror and the rotation mechanism, the lens and the projector/projection engine. The processing module may control the projection system. Additionally, the image plane 410 is shown. The control system may be configured to provide features such as projection mapping and/or gesture or object tracking and recognition. Fig. 4a further shows the projection surface 12, which may be a vehicle interior surface, a hand/body, and/or an object within the cabin interior. Fig. 4a further shows a projection within the vehicle interior, i.e. on the projection surface 12, e.g. at portions 14 of the projection surface. At the portions 14 of the projection surface 12, a projected image is shown.

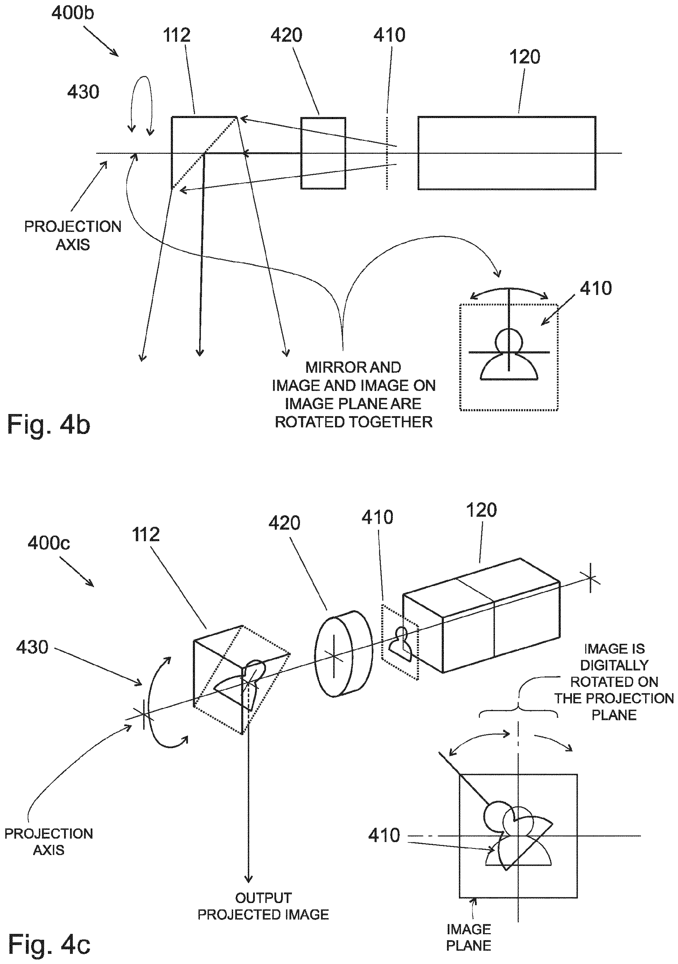

Fig. 4b shows a side view of an embodiment of a projection apparatus/system 400b, which may be similar to the projection apparatus/system 400a of Fig. 4a. In Fig. 4a, in addition to the components shown in Fig. 4a, a rotation 430 of the bounce mirror 112 is shown, which may be performed by a servo motor. In other words, the mirror may be rotated about the projection axis, e.g. by a servo motor. Fig. 4b further shows a projection axis. The image on the image plane 410 is further shown in magnification. For example, the mirror and the image on the image plane may be rotated together (e.g. by adjusting the display signal to the extent of the portion of the projection surface).

Fig. 4c shows a ¾ view of an embodiment of a projection apparatus/system 400c, which may be similar to the projection apparatus/system 400a of Fig. 4a and/or of the projection apparatus/system 400b of Fig. 4b. In Fig. 4c, the rotation of the image in the image plane is shown. The image may be digitally rotated on the projection plane. Fig. 4c further shows, where the projection image is being output.

Figs. 4d and 4e show two exemplary implementations 400d; 400e of the projection apparatuses shown in Figs. 4a to 4c, with two different sensor arrangement for a sensor 140. In Fig. 4d, the sensor uses the same optical path as the projection. For example, the sensor may sense the three-dimensional characteristic of the portion of the projection surface via the bounce mirror 112 and via a combiner mirror 440. For example, the combined mirror may be arranged such, that the sensor is able to "look" coaxially along the projection beam. Figs. 4a show the projection beam 450 and the path 460 that is being used by the sensor. In Fig. 4e, the sensor 140 does not use the optical path of the projection apparatus, and is arranged outside the projection apparatus.

The projection apparatus/system may perform an articulation of a digital projection (i.e. the projection beam) by the synchronized rotation of a physical "bounce mirror" (i.e. the reflective surface) and digital rotation of the projection image (via the display signal). The bounce mirror may be at some angle to the projection axis (e.g. 45°), and is used to direct the projection beam (i.e. projected image). The mirror may be rotated about the projection axis (the "projection axis" is the center axis of symmetry of the lens and projection engine. The rotation may be driven by an electromechanical device such as a servo motor and/or gearing mechanism, and controlled by the control system. The projection image may be digitally rotated relative to the Image Plane. The Image Plane itself is stationary and does not rotate. The digital rotation may be controlled by the Control System software. The digital rotation may be synchronized with the physical rotation of the bounce mirror. The articulation of the digital projection may expand the spatial area that can be projected by a conventional optical lens and may optimize the light intensity delivered to the projection surface (e.g. users hand or interior surfaces). The digitally projected image may be swept across the cabin; e.g. from side to side, or front to back of the cabin, depending on the orientation of the projection axis (i.e. projection direction). For example, the digital projection may be articulated in a number or different ways. For example, the digital projection may be articulated by a continuously operated projection system (such that the image appears to move across the vehicle interior), or the articulation may be incrementally operated such that the image instantaneously appears at various points across the cabin. Alternatively or additionally, a combined effect may be used where the projection image (e.g. the source image) is digitally manipulated or moved simultaneously (or incoordination) with the articulation of the digital projection.

The projection system/apparatus may have one or more additional features (that are compatible with the above approach). For example, projection mapping may be performed to any surfaces (e.g. portions of the projection surface) within the cabin (e.g. seats, door trim, dashboard, users' hands and/or body, and/or any objects within the cabin (e.g. objects belonging within the vehicle or objects brought into the vehicle by the occupants) or outside the cabin (e.g. the ground or a wall). This can come from predefined data on surface geometry or by sensing the surface geometry (e.g. the three-dimensional characteristic of the portion of the projection surface) in real-time (e.g. based on surface tracking). For example, teal-time tracking and recognition of surfaces and objects may be performed (e.g. to determine the portion of the projection surface and its extent), for example including both static and dynamic vehicle interior surfaces (e.g. articulating/moving seats, door panels, armrests, etc.), users' hands and/or bodies, and/or objects within the interior or brought into the interior by the occupants. In some embodiments, a limited three-dimensional rotation may be introduced to further increase the spatial area that can be projected upon. (E.g. by introducing an additional rotation about an axis that is perpendicular to the projection axis of the bounce mirror).

For example, sensor(s) used for tracking and recognition can be independent of the projection system - for example if the sensing technology has a sufficient field of view to encompass the complete projection space or extent of the vehicle cabin (see Fig. 4e). Alternatively (or additionally, in case multiple sensors are used), the sensor(s) may be combined with the pro-j ection system - such that the sensors are incorporated relative to the mirror, lens or projection engine. For example, the sensor(s) may be mounted relative to the mirror such that it rotates with the mirror. Alternatively (or additionally, in case multiple sensors are used), the sensor(s) may be mounted in-line with the projection axis, at some point along the projection axis relative to the mirror. For example the sensor(s) might be mounted behind a combiner mirror such that it shares the same optical path as the projection beam (see Fig. 4d).

In various embodiments, the projection system may be attached to the interior of the car (e.g. ceiling, above the front or rear seats, or centrally (e.g. above the center armrest)), such that the digitally projected image can move from side to side across width of the cabin, or such that the digitally projected image can move from front to back (or up and down the length of the cabin, or such that it can move along any axis of orientation inside the cabin. In some embodiments, the projection surface may be outside of the vehicle..

The projection system is driven by a control system (i.e. the processing module). The control system may be be a standalone/separate system or integrated within the overall vehicle system or sub-systems. The control system may provide various functions, which may include one or more control of the articulation of the digital projection (i.e. the angle of the reflective surface) to deliver the projected image (static or dynamic image) on the desired surface and position, delivering the video signal (i.e. the display signal) to the projection system, incorporating sensor input for the tracking and recognition of surfaces (e.g. of interior cabin surfaces, user bodies, objects, etc.), gestures (e.g. hand and body) and/or 3 dimensional objects (e.g. to determine the portion of the projection surface and its extent), and projection mapping of the projected image to three surfaces (e.g. of interior cabin surfaces, user bodies, objects, etc.) by incorporating pre-defined or pre-baked data on the three-dimensional surfaces (e.g. static configuration of the interior, such as dashboard, door panel, etc.) or real-time of dynamic surfaces (e.g. movement of seats, users' hands or bodies, objects, etc.), e.g. by adjusting the display signal to the portion of the projection surface).

The projection system can be combined with other features for specific applications or use cases; for example -to combine ambient lighting, dynamic digital projection and scent. Additionally, the digital projection may be interactive (through gesture recognition and novel features ), and/or by projecting a user interface on a surface of the vehicle or on a hand of a user of the vehicle, e.g. to increase the spatial area that can be projected upon. For example, the user interface may be projected onto the hand of a user. Accordingly, the hand of the user may be the portion of the projection surface. The movement of the hand may be recorded via a depth sensor, i.e. the movement of the hand that is orthogonal to a depth axis between the depth sensor and the hand. In addition, movements along the depth axis can be detected, enabling intuitive control of the user interface. As an alternative to the hand, another part of the body, such as an arm/forearm or a leg/shank, may be used both as projection surface and entity controlling the user interface. Correspondingly, in such cases, the movement of the other body part may be recorded and used to control the user interface. The user interface may follow the hand/body part around the interior of the vehicle.

Embodiments of the present disclosure may be used in vehicles, e.g. in conventional and autonomous driving vehicles, or in concept vehicles. Furthermore, there are general transportation applications and non-transportation applications.

More details and aspects of the concept are mentioned in connection with the proposed concept or one or more examples described above or below (e.g. Fig. 1a to 2). The concept may comprise one or more additional optional features corresponding to one or more aspects of the proposed concept or one or more examples described above or below.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

### Reference Signs

- 10: Vehicle
- 12: Projection surface
- 14: Portion of the projection surface
- 100: Projection apparatus
- 110: Reflection device
- 112: Reflective surface
- 120: Projector
- 130: Processing module
- 140: Sensor
- 210: Determining a portion of a projection surface
- 220: Controlling a reflection device to adjust an angle of a reflective surface
- 230: Determining a three-dimensional characteristic of the portion of the projection surface
- 240: Generating a display signal
- 300: Projection apparatus
- 310: User
- 400a-400e: Projection apparatus
- 410: Image plane
- 420: Lens
- 430: Rotation
- 440: Combiner mirror
- 450: Projection beam
- 460: Optical path for sensor

## Claims

1. A projection apparatus (100; 200; 300; 400a-e) for a vehicle (10), the projection apparatus comprising:
a reflection device (110) configured to provide a reflective surface (112) with a varying angle relative to a projection surface (12);
a projector (120) configured to emit a projection beam towards the reflective surface of the reflection device; and
a processing module (130) configured to:
determine a portion (14) of the projection surface that the projection beam is to be emitted towards,
obtain a sensor signal from a sensor (140) of the vehicle, the sensor signal comprising information on the three-dimensional characteristic of the portion of the projection surface,
control the reflection device to adjust the angle of the reflective surface relative to the projection surface based on the determined portion of the projection surface,
determine a three-dimensional characteristic of the portion of the projection surface based on the sensor signal, and
generate a display signal for the projector based on the portion of the projection surface and based on the three-dimensional characteristic of the portion of the projection surface.

2. The projection apparatus according to claim 1, wherein the sensor signal is a sensor signal of a depth sensor (140) of the vehicle,
and/or wherein the sensor signal comprises information on at least one of a surface structure, a position, an orientation, a size, and a boundary of the portion of the projection surface.

3. The projection apparatus according to one of the claims 1 or 2 comprising the sensor, wherein the sensor is directed towards the reflective surface of the reflection device, wherein the sensor is configured to determine the sensor signal via the reflective surface of the reflection device.

4. The projection apparatus according to one of the claims 1 to 3, wherein the processing module is configured to select the portion of the projection surface that the projection beam is to be emitted towards based on the sensor signal.

5. The projection apparatus according to claim 4, wherein the processing module is configured to obtain information on a content to be projected towards the projection surface, wherein the processing module is configured to select the portion of the projection surface that the projection beam is to be emitted towards further based on the content to be projected towards the projection surface.

6. The projection apparatus according to one of the claims 1 to 5, wherein the processing module is configured to determine an extent of the portion of the projection surface based on the sensor signal, and to adjust the display signal such, that a content portion of the projection beam matches the extent of the portion of the projection surface.

7. The projection apparatus according to claim 6, wherein the extent of the portion of the projection surface comprises at least one of a position, a three-dimensional orientation, a size, and a boundary of the portion of the projection surface.

8. The projection apparatus according to one of the claims 1 to 7, wherein the processing module is configured to track a movement of the portion of the projection surface if the portion of the projection surface is provided by a non-static object within or outside the vehicle, and to update the angle of the reflective surface and the generation of the display signal based on the movement of the portion of the projection surface.

9. The projection apparatus according to one of the claims 1 to 8, wherein the reflection device is configured to adjust the angle of the reflective surface by rotating the reflective surface about a projection axis of the projection apparatus, wherein the processing module is configured to generate the display signal such, that a content portion of the projection beam rotates in synchronization with the rotation of the reflective surface.

10. The projection apparatus according to one of the claims 1 to 9, wherein the reflection device is configured to provide the reflective surface with a varying angle relative to the projector, wherein the reflection device comprises an electro-mechanical component for varying the angle of the reflective surface relative to the projector and relative to the projection surface.

11. The projection apparatus according to one of the claims 1 to 10, wherein the processing module is configured to generate the display signal such, that an effect of the three-dimensional characteristic on a presentation of content on the portion of the projection surface is at least partially compensated for.

12. A method for providing a projection within or outside a vehicle, the method comprising:
determining (210) a portion of a projection surface that a projection beam of a projector is to be emitted towards;
obtaining a sensor signal from a sensor of the vehicle, the sensor signal comprising information on the three-dimensional characteristic of the portion of the projection surface;
controlling (220) a reflection device to adjust an angle of a reflective surface relative to the projection surface based on the determined portion of the projection surface, the projector beam being emitted towards the portion of the projection surface via the reflective surface;
determining (230) a three-dimensional characteristic of the portion of the projection surface based on the sensor signal; and
generating (240) a display signal for the projector based on the portion of the projection surface and based on the three-dimensional characteristic of the portion of the projection surface.

13. A computer program having a program code for performing the method of claim 12, when the computer program is executed on a computer, a processor, or a programmable hardware component.

14. A vehicle (10) comprising the projection apparatus (100) according to one of the claims 1 to 11.

## Patentansprüche

1. Projektionsvorrichtung (100; 200; 300; 400a-e) für ein Fahrzeug (10), wobei die Projektionsvorrichtung folgende Elemente umfasst:
eine Reflexionsvorrichtung (110), die dafür ausgelegt ist, eine reflektierende Oberfläche (112) mit einem variierenden Winkel relativ zu einer Projektionsfläche (12) bereitzustellen;
einen Projektor (120), der dafür ausgelegt ist, einen Projektionsstrahl zur reflektierenden Oberfläche der Reflexionsvorrichtung zu emittieren; und
ein Verarbeitungsmodul (130), das für folgende Vorgänge ausgelegt ist:
Bestimmen eines Abschnitts (14) der Projektionsfläche, auf den der Projektionsstrahl emittiert werden soll,
Erhalten eines Sensorsignals von einem Sensor (140) des Fahrzeugs, wobei das Sensorsignal Informationen über die dreidimensionale Charakteristik des Abschnitts der Projektionsfläche umfasst,
Steuern der Reflexionsvorrichtung zum Einstellen des Winkels der reflektierenden Oberfläche relativ zur Projektionsfläche auf der Grundlage des bestimmten Abschnitts der Projektionsfläche, Bestimmen einer dreidimensionalen Charakteristik des Abschnitts der Projektionsfläche auf der Grundlage des Sensorsignals, und
Erzeugen eines Anzeigesignals für den Projektor auf der Grundlage des Abschnitts der Projektionsfläche und auf der Grundlage der dreidimensionalen Charakteristik des Abschnitts der Projektionsfläche.

2. Projektionsvorrichtung nach Anspruch 1, wobei das Sensorsignal ein Sensorsignal eines Tiefensensors (140) des Fahrzeugs ist,
und/oder wobei das Sensorsignal Informationen über mindestens eine Oberflächenstruktur, eine Position, eine Ausrichtung, eine Größe und eine Begrenzung des Abschnitts der Projektionsfläche umfasst.

3. Projektionsvorrichtung nach einem der Ansprüche 1 oder 2, umfassend den Sensor, wobei der Sensor auf die reflektierende Oberfläche der Reflexionsvorrichtung gerichtet ist, wobei der Sensor dafür ausgelegt ist, das Sensorsignal über die reflektierende Oberfläche der Reflexionsvorrichtung zu bestimmen.

4. Projektionsvorrichtung nach einem der Ansprüche 1 bis 3, wobei das Verarbeitungsmodul dafür ausgelegt ist, den Abschnitt der Projektionsfläche, auf den der Projektionsstrahl emittiert werden soll, auf der Grundlage des Sensorsignals auszuwählen.

5. Projektionsvorrichtung nach Anspruch 4, wobei das Verarbeitungsmodul dafür ausgelegt ist, Informationen über einen auf die Projektionsfläche zu projizierenden Inhalt zu erhalten, wobei das Verarbeitungsmodul dafür ausgelegt ist, den Abschnitt der Projektionsfläche, auf den der Projektionsstrahl emittiert werden soll, ferner auf der Grundlage des auf die Projektionsfläche zu projizierenden Inhalts auszuwählen.

6. Projektionsvorrichtung nach einem der Ansprüche 1 bis 5, wobei das Verarbeitungsmodul dafür ausgelegt ist, auf der Grundlage des Sensorsignals eine Ausdehnung des Abschnitts der Projektionsfläche zu bestimmen und das Anzeigesignal so einzustellen, dass ein Inhaltsabschnitt des Projektionsstrahls mit der Ausdehnung des Abschnitts der Projektionsfläche übereinstimmt.

7. Projektionsvorrichtung nach Anspruch 6, wobei die Ausdehnung des Abschnitts der Projektionsfläche mindestens eine Position, eine dreidimensionale Ausrichtung, eine Größe und eine Begrenzung des Abschnitts der Projektionsfläche umfasst.

8. Projektionsvorrichtung nach einem der Ansprüche 1 bis 7, wobei das Verarbeitungsmodul dafür ausgelegt ist, eine Bewegung des Abschnitts der Projektionsfläche zu verfolgen, wenn der Abschnitt der Projektionsfläche durch ein nicht-statisches Objekt innerhalb oder außerhalb des Fahrzeugs bereitgestellt wird, und den Winkel der reflektierenden Oberfläche und die Erzeugung des Anzeigesignals auf der Grundlage der Bewegung des Abschnitts der Projektionsfläche zu aktualisieren.

9. Projektionsvorrichtung nach einem der Ansprüche 1 bis 8, wobei die Reflexionsvorrichtung dafür ausgelegt ist, den Winkel der reflektierenden Oberfläche durch Drehen der reflektierenden Oberfläche um eine Projektionsachse der Projektionsvorrichtung einzustellen, wobei das Verarbeitungsmodul dafür ausgelegt ist, das Anzeigesignal so zu erzeugen, dass sich ein Inhaltsabschnitt des Projektionsstrahls synchron mit der Drehung der reflektierenden Oberfläche dreht.

10. Projektionsvorrichtung nach einem der Ansprüche 1 bis 9, wobei die Reflexionsvorrichtung dafür ausgelegt ist, die reflektierende Oberfläche mit einem variierenden Winkel relativ zum Projektor bereitzustellen, wobei die Reflexionsvorrichtung eine elektromechanische Komponente zum Variieren des Winkels der reflektierenden Oberfläche relativ zum Projektor und relativ zur Projektionsfläche umfasst.

11. Projektionsvorrichtung nach einem der Ansprüche 1 bis 10, wobei das Verarbeitungsmodul dafür ausgelegt ist, das Anzeigesignal so zu erzeugen, dass eine Auswirkung der dreidimensionalen Charakteristik auf eine Darstellung von Inhalten auf dem Abschnitt der Projektionsfläche zumindest teilweise kompensiert wird.

12. Verfahren zum Bereitstellen einer Projektion innerhalb oder außerhalb eines Fahrzeugs, wobei das Verfahren folgende Vorgänge umfasst:
Bestimmen (210) eines Abschnitts einer Projektionsfläche, auf den ein Projektionsstrahl eines Projektors emittiert werden soll;
Erhalten eines Sensorsignals von einem Sensor des Fahrzeugs, wobei das Sensorsignal Informationen über die dreidimensionale Charakteristik des Abschnitts der Projektionsfläche umfasst;
Steuern (220) einer Reflexionsvorrichtung zum Einstellen eines Winkels einer reflektierenden Oberfläche relativ zur Projektionsfläche auf der Grundlage des bestimmten Abschnitts der Projektionsfläche, wobei der Projektorstrahl über die reflektierende Oberfläche zum Abschnitt der Projektionsfläche emittiert wird;
Bestimmen (230) einer dreidimensionalen Charakteristik des Abschnitts der Projektionsfläche auf der Grundlage des Sensorsignals; und
Erzeugen (240) eines Anzeigesignals für den Projektor auf der Grundlage des Abschnitts der Projektionsfläche und auf der Grundlage der dreidimensionalen Charakteristik des Abschnitts der Projektionsfläche.

13. Computerprogramm mit einem Programmcode zum Durchführen des Verfahrens nach Anspruch 12 bei Ausführung des Computerprogramms auf einem Computer, einem Prozessor oder einer programmierbaren Hardwarekomponente.

14. Fahrzeug (10), umfassend die Projektionsvorrichtung (100) nach einem der Ansprüche 1 bis 11.

## Revendications

1. Appareil de projection (100 ; 200 ; 300 ; 400a-e) pour un véhicule (10), l'appareil de projection comprenant :
un dispositif de réflexion (110) configuré pour fournir une surface réfléchissante (112) avec un angle variable par rapport à une surface de projection (12) ;
un projecteur (120) configuré pour émettre un faisceau de projection vers la surface réfléchissante du dispositif de réflexion ; et
un module de traitement (130) configuré pour :
déterminer une partie (14) de la surface de projection vers laquelle le faisceau de projection doit être émis, obtenir un signal de capteur à partir d'un capteur (140) du véhicule, le signal de capteur comprenant des informations sur la caractéristique tridimensionnelle de la partie de la surface de projection,
commander le dispositif de réflexion pour ajuster l'angle de la surface réfléchissante par rapport à la surface de projection sur la base de la partie déterminée de la surface de projection,
déterminer une caractéristique tridimensionnelle de la partie de la surface de projection sur la base du signal du capteur, et
générer un signal d'affichage pour le projecteur sur la base de la partie de la surface de projection et sur la base de la caractéristique tridimensionnelle de la partie de la surface de projection.

2. Appareil de projection selon la revendication 1, dans lequel le signal de capteur est un signal de capteur d'un capteur de profondeur (140) du véhicule,
et/ou dans lequel le signal du capteur comprend des informations sur au moins l'une d'une structure de surface, d'une position, d'une orientation, d'une taille et d'une limite de la partie de la surface de projection.

3. Appareil de projection selon l'une des revendications 1 ou 2 comprenant le capteur, où le capteur est dirigé vers la surface réfléchissante du dispositif de réflexion, où le capteur est configuré pour déterminer le signal du capteur par l'intermédiaire de la surface réfléchissante du dispositif de réflexion.

4. Appareil de projection selon l'une des revendications 1 à 3, dans lequel le module de traitement est configuré pour sélectionner la partie de la surface de projection vers laquelle le faisceau de projection doit être émis sur la base du signal du capteur.

5. Appareil de projection selon la revendication 4, dans lequel le module de traitement est configuré pour obtenir des informations sur un contenu à projeter vers la surface de projection, où le module de traitement est configuré pour sélectionner la partie de la surface de projection vers laquelle le faisceau de projection doit être émis sur la base du contenu à projeter vers la surface de projection.

6. Appareil de projection selon l'une des revendications 1 à 5, dans lequel le module de traitement est configuré pour déterminer une étendue de la partie de la surface de projection sur la base du signal du capteur, et pour ajuster le signal d'affichage de telle sorte qu'une partie du contenu du faisceau de projection corresponde à l'étendue de la partie de la surface de projection.

7. Appareil de projection selon la revendication 6, dans lequel l'étendue de la partie de la surface de projection comprend au moins un élément parmi une position, une orientation tridimensionnelle, une taille et une limite de la partie de la surface de projection.

8. Appareil de projection selon l'une des revendications 1 à 7, dans lequel le module de traitement est configuré pour suivre un mouvement de la partie de la surface de projection si la partie de la surface de projection est fournie par un objet non statique à l'intérieur ou à l'extérieur du véhicule, et pour mettre à jour l'angle de la surface réfléchissante et la génération du signal d'affichage sur la base du mouvement de la partie de la surface de projection.

9. Appareil de projection selon l'une des revendications 1 à 8, dans lequel le dispositif de réflexion est configuré pour ajuster l'angle de la surface réfléchissante en faisant tourner la surface réfléchissante autour d'un axe de projection de l'appareil de projection, où le module de traitement est configuré pour générer le signal d'affichage de telle sorte qu'une partie du contenu du faisceau de projection tourne en synchronisation avec la rotation de la surface réfléchissante.

10. Appareil de projection selon l'une des revendications 1 à 9, dans lequel le dispositif de réflexion est configuré pour fournir à la surface réfléchissante un angle variable par rapport au projecteur, où le dispositif de réflexion comprend un composant électromécanique pour faire varier l'angle de la surface réfléchissante par rapport au projecteur et par rapport à la surface de projection.

11. Appareil de projection selon l'une des revendications 1 à 10, dans lequel le module de traitement est configuré pour générer le signal d'affichage de telle sorte qu'un effet de la caractéristique tridimensionnelle sur une présentation du contenu sur la partie de la surface de projection est au moins partiellement compensé.

12. Procédé pour fournir une projection à l'intérieur ou à l'extérieur d'un véhicule, le procédé comprenant les étapes suivantes :
déterminer (210) une partie d'une surface de projection vers laquelle un faisceau de projection d'un projecteur doit être émis ;
obtenir un signal de capteur à partir d'un capteur du véhicule, le signal de capteur comprenant des informations sur la caractéristique tridimensionnelle de la partie de la surface de projection ;
commander (220) un dispositif de réflexion pour ajuster un angle d'une surface réfléchissante par rapport à la surface de projection sur la base de la partie déterminée de la surface de projection, le faisceau du projecteur étant émis vers la partie de la surface de projection par l'intermédiaire de la surface réfléchissante ;
déterminer (230) une caractéristique tridimensionnelle de la partie de la surface de projection sur la base du signal du capteur ; et
générer (240) un signal d'affichage pour le projecteur sur la base de la partie de la surface de projection et sur la base de la caractéristique tridimensionnelle de la partie de la surface de projection.

13. Programme informatique ayant un code de programme pour exécuter le procédé de la revendication 12 lorsque le programme informatique est exécuté sur un ordinateur, un processeur, ou un composant matériel programmable.

14. Véhicule (10) comprenant l'appareil de projection (100) selon l'une des revendications 1 à 11.
